(19) Europäisches Patentamt
European Patent Office
Office européen des brevets

(11) EP 4 455 080 A1

(12) **EUROPEAN PATENT APPLICATION**
published in accordance with Art. 153(4) EPC

(43) Date of publication:
**30.10.2024 Bulletin 2024/44**

(21) Application number: **22911425.1**

(22) Date of filing: **23.12.2022**

(51) International Patent Classification (IPC):
***C01B 25/00*** *(2006.01)* ***C01B 25/02*** *(2006.01)*
***H01M 4/36*** *(2006.01)* ***H01M 4/38*** *(2006.01)*
***H01M 4/587*** *(2010.01)*

(52) Cooperative Patent Classification (CPC):
**C01B 25/00; C01B 25/02; H01M 4/36; H01M 4/38; H01M 4/587;** Y02E 60/10

(86) International application number:
**PCT/JP2022/047738**

(87) International publication number:
**WO 2023/120724 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 JP 2021211116**

(71) Applicants:
- **Sumitomo Chemical Company, Limited**
  **Tokyo 103-6020 (JP)**
- **Kyoto University**
  **Kyoto-shi, Kyoto 606-8501 (JP)**

(72) Inventors:
- **ABE, Takeshi**
  **Kyoto-shi, Kyoto 606-8501 (JP)**
- **NASARA, Ralph Nicolai Vivares**
  **Kyoto-shi, Kyoto 606-8501 (JP)**
- **SHIMANO, Satoshi**
  **Kyoto-shi, Kyoto 606-8501 (JP)**
- **CELIK KUCUK, Asuman**
  **Kyoto-shi, Kyoto 606-8501 (JP)**

(74) Representative: **Vossius & Partner**
**Patentanwälte Rechtsanwälte mbB**
**Siebertstrasse 3**
**81675 München (DE)**

# (54) PHOSPHORUS-CARBON COMPOSITE MATERIAL, PHOSPHORUS-CARBON COMPOSITE MATERIAL PRODUCTION METHOD, NEGATIVE ELECTRODE ACTIVE MATERIAL, NEGATIVE ELECTRODE FOR LITHIUM SECONDARY BATTERY, AND LITHIUM SECONDARY BATTERY

(57) A phosphorus-carbon composite material includes: phosphorus atoms; and carbon atoms, in which a content ratio of the phosphorus atoms in the phosphorus-carbon composite material is 10 mass% or more and 95 mass% or less, a content ratio of the carbon atoms in the phosphorus-carbon composite material is 5 mass% or more and 90 mass% or less, and a ratio $WL_{620}/WL_{780}$ of a weight loss ratio $WL_{620}$ at a measurement temperature of 620°C and a weight loss ratio $WL_{780}$ at a measurement temperature of 780°C, which are obtained by thermogravimetric measurement under the following conditions, is 0.1 or more and 0.9 or less. (Thermogravimetric measurement) 10 mg of the phosphorus-carbon composite material is accurately weighed to prepare a sample, and using a thermogravimetric measuring device, a weight change when the sample is heated from 50°C to 780°C at a temperature rising rate of 10 °C/min in $N_2$ is measured. (Weight loss ratio) A ratio of a weight of the sample at the measurement temperature to a weight of the accurately weighed sample is defined as a weight loss ratio (weight%) at the measurement temperature.

FIG. 1

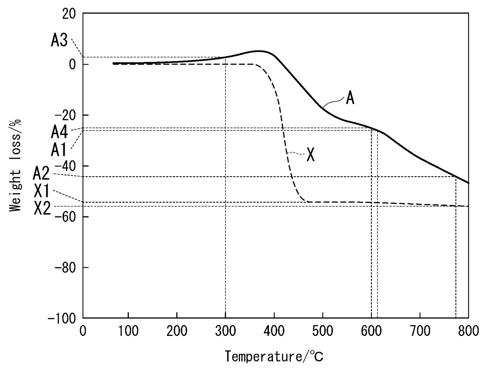


EP 4 455 080 A1

Processed by Luminess, 75001 PARIS (FR)

## Description

[Technical Field]

The present invention relates to a phosphorus-carbon composite material, a method of producing a phosphorus-carbon composite material, a negative electrode active material, a negative electrode for a lithium secondary battery, and a lithium secondary battery.

Priority is claimed on Japanese Patent Application No. 2021-211116, filed on December 24, 2021, the content of which is incorporated herein by reference.

[Background Art]

A lithium secondary battery is used as a power source of small electronic devices such as mobile phones and notebook computers. In recent years, the lithium secondary battery has also been put into practical use in medium or large power sources, such as for automobiles power storage, and the like.

As a negative electrode active material of the lithium secondary battery, a carbon material is known. In the related art, a negative electrode active material in which phosphorus is further contained in a carbon material for the purpose of improving battery performance has been known (for example, refer to Patent Document 1). In the negative electrode active material described in Patent Document 1, since the negative electrode active material containing the carbon material further contains phosphorus, a negative electrode having excellent charge and discharge capacities can be obtained.

[Citation List]

[Patent Document]

[Patent Document 1]
Japanese Unexamined Patent Application, First Publication No. H11-67207

[Summary of Invention]

[Technical Problem]

In order to obtain a lithium secondary battery having high reliability and high performance, as the negative electrode active material, a material having excellent durability in addition to charge and discharge capacities is required. There is still room for improvement in the negative electrode active material in the related art in order to improve the performance of the lithium secondary battery.

The present invention has been made in view of such circumstances, and an object of the present invention is to provide a novel phosphorus-carbon composite material containing phosphorus and carbon. In addition, another object is to provide a method of producing a phosphorus-carbon composite material, which enables favorable production of such a novel phosphorus-carbon composite material. Furthermore, still another object is to provide a negative electrode active material containing such a novel phosphorus-carbon composite material, a negative electrode for a lithium secondary battery, and a lithium secondary battery.

[Solution to Problem]

In order to achieve the above objects, an aspect of the present invention includes the following aspects.

[1] A phosphorus-carbon composite material including: phosphorus atoms; and carbon atoms, in which a content ratio of the phosphorus atoms in the phosphorus-carbon composite material is 10 mass% or more and 95 mass% or less, a content ratio of the carbon atoms in the phosphorus-carbon composite material is 5 mass% or more and 90 mass% or less, and a ratio $WL_{620}/WL_{780}$ of a weight loss ratio $WL_{620}$ at a measurement temperature of 620°C and a weight loss ratio $WL_{780}$ at a measurement temperature of 780°C, which are obtained by thermogravimetric measurement under the following conditions, is 0.1 or more and 0.9 or less, in which

(thermogravimetric measurement)
10 mg of the phosphorus-carbon composite material is accurately weighed to prepare a sample, and using a thermogravimetric measuring device, a weight change when the sample is heated from 50°C to 780°C at a temperature rising rate of 10 °C/min in a nitrogen stream is measured, and
(weight loss ratio)
a ratio of a weight of the sample at the measurement temperature to a weight of the accurately weighed sample is defined as a weight loss ratio (weight%) at the measurement temperature.

[2] The phosphorus-carbon composite material according to [1], in which a ratio $WL_{300}/WL_{600}$ of a weight loss ratio $WL_{300}$ at a measurement temperature of 300°C and a weight loss ratio $WL_{600}$ at a measurement temperature of 600°C, which are obtained by the thermogravimetric measurement, is -0.1 or more and 0.1 or less.
[3] The phosphorus-carbon composite material according to [1] or [2], in which in an XPS spectrum, a peak indicating a bond between a phosphorus atom and a carbon atom is present.
[4] The phosphorus-carbon composite material according to any one of [1] to [3], in which, in an XRD profile measured using CuKα radiation, an intensity $I_{20}$ at 2θ = 20°, an intensity $I_{26.3}$ at 2θ = 26.3°, and an intensity $I_{40}$ at 2θ = 40° satisfy Expressions (1) to (3) below,

$$|P|/|B| < 2 \quad \ldots (1)$$

$$P = I_{26.3} - I_{40} \quad \ldots (2)$$

$$B = (I_{20} - I_{40}) \times (26.3 - 40)/(20 - 40) \quad \ldots (3).$$

[5] The phosphorus-carbon composite material according to any one of [1] to [4], in which the phosphorus-carbon composite material includes a core particle containing phosphorus atoms and a carbon film covering a surface of the core particle.
[6] A method of producing a phosphorus-carbon composite material, the method including: a step of compositing a carbon material and phosphorus by a mixing and grinding process accompanied by compression.
[7] A method of producing a phosphorus-carbon composite material, the method including: a step of performing ball mill mixing on a carbon material and phosphorus.
[8] The method of producing a phosphorus-carbon composite material according to [6] or [7], in which the carbon material is at least one selected from the group consisting of amorphous carbon, graphite, porous carbon, a mesocarbon microbead, a fullerene, a carbon nanotube, graphene, graphene oxide, carbon nitride ($C_3N_4$), and a layered carbon nanofiber.
[9] The method of producing a phosphorus-carbon composite material according to any one of [6] to [8], in which the phosphorus is black phosphorus.
[10] A negative electrode active material including: the phosphorus-carbon composite material according to any one of [1] to [5].
[11] A negative electrode for a lithium secondary battery, including: the negative electrode active material according to [10].
[12] A lithium secondary battery including: the negative electrode for a lithium secondary battery according to [11].

[Advantageous Effects of Invention]

According to the present invention, it is possible to provide a novel phosphorus-carbon composite material including phosphorus and carbon. In addition, it is possible to provide a method of producing a phosphorus-carbon composite material, which suitably enables the production of such a novel phosphorus-carbon composite material. Furthermore, it is possible to provide a negative electrode active material including such a novel phosphorus-carbon composite material, a negative electrode for a lithium secondary battery, and a lithium secondary battery.

[Brief Description of Drawings]

FIG. 1 is a graph showing results of thermogravimetric measurement performed on a P-C material and a P-C mixture.
FIG. 2 shows XPS spectra of the P-C material and the P-C mixture.
FIG. 3 is a transmission electron microscope (TEM) photograph of the P-C material.
FIG. 4 shows XRD profiles of the P-C material and the P-C mixture.

FIG. 5 is a schematic view showing an example of a lithium secondary battery.
FIG. 6 is a schematic view showing an example of an all-solid-state lithium secondary battery.
FIG. 7 is a graph showing results of thermogravimetric measurement of P-C materials produced in Examples 1 and 4 to 7 and a P-C mixture produced in Comparative Example 2.
FIG. 8 shows XPS spectra of the P-C materials produced in Examples 1 to 5 and 7.
FIG. 9 shows XRD profiles of the P-C materials produced in Examples 1 to 7 and the P-C mixtures produced in Comparative Examples 1 and 2.
FIG. 10 is a graph showing discharge capacities of lithium secondary batteries using the P-C materials of Examples 1 to 7 and Comparative Example 2 up to 100 cycles.

[Description of Embodiments]

Hereinafter, a method of producing a phosphorus-carbon composite material, a negative electrode active material, a negative electrode for a lithium secondary battery, and a lithium secondary battery according to the present embodiment will be described with reference to FIGS. 1 to 6. In all the drawings below, the dimensions and ratios of each constituent element are appropriately modified in order to make the drawings easier to see.

<<Phosphorus-Carbon Composite Mateiial>>

A phosphorus-carbon composite material includes phosphorus atoms and carbon atoms. In the following description, the "phosphorus-carbon composite material" may be simply referred to as "P-C material".
Regarding the P-C material, a content ratio of the phosphorus atoms in the P-C material is 10 mass% or more and 95 mass% or less. In addition, a content ratio of the carbon atoms in the P-C material is 5 mass% or more and 90 mass% or less. In the present specification, the "content ratio of a certain atom in the P-C material" means "the content ratio (mass%) of a certain atom when the entire P-C material is 100 mass%". In a case where the P-C material consists of the phosphorus atoms and the carbon atoms, a sum of the content ratio of the carbon atoms and the content ratio of the phosphorus atoms in the P-C material is 100 mass%. Even in the case where the P-C material consists of the carbon atoms and the phosphorus atoms, impurities that are inevitably mixed in from raw materials or production steps of the P-C material are allowed.
The P-C material may have 60 mass% or more of the entire P-C material consist of the phosphorus atoms and the carbon atoms, and may further include elements other than the phosphorus atoms and the carbon atoms.
Examples of the element other than the phosphorus atoms and the carbon atoms included in the P-C material include lithium, silicon, germanium, tin, aluminum, zinc, magnesium, transition metals, nitrogen, oxygen, fluorine, silicon, titanium, niobium, sulfur, and chlorine.
In a case where the P-C material includes these elements, as a raw material of the P-C material, a metal oxide, a composite metal oxide, a metal fluoride, a metal sulfide, a metal chloride, silicon oxide, silicate, titanate, or aluminate of these elements can be used.
The content ratio of the phosphorus atoms, the content ratio of the carbon atoms, and a content ratio of any other atoms which can be further included in the P-C material can be determined by known ICP analysis.
In the P-C material, the content ratio of the phosphorus atoms is preferably 20 mass% or more, more preferably 30 mass% or more, and still more preferably 50 mass% or more. A higher content ratio of phosphorus can increase initial charge and discharge capacities of the P-C material. In addition, in the P-C material, the content ratio of the phosphorus atoms is preferably 90 mass% or less, more preferably 80 mass% or less, and still more preferably 75 mass% or less. The reason is that, in a case where the content ratio of the phosphorus atoms is too high, cycle characteristics of the P-C material deteriorate. An upper limit and a lower limit of the content ratio of the phosphorus atoms can be combined at will.
In the P-C material, the content ratio of the carbon atoms is preferably 10 mass% or more, more preferably 20 mass% or more, and still more preferably 25 mass% or more. A content ratio of the carbon atoms can enhance the cycle characteristics of the P-C material. In addition, in the P-C material, the content ratio of the carbon atoms is preferably 80 mass% or less, more preferably 70 mass% or less, and still more preferably 50 mass% or less. This is because, in a case where the content ratio of the carbon atom is too high, the initial charge and discharge capacities of the P-C material decrease. An upper limit and a lower limit of the content ratio of the carbon atoms can be combined at will.
Although details will be described below, the P-C material can be produced by performing ball mill mixing on phosphorus and a carbon material. The inventors conducted detailed analysis and examination on the obtained P-C material, and confirmed that the P-C material is not a mixture simply obtained by mixing phosphorus and the carbon material, which are raw materials, but is a novel material in which phosphorus atoms and carbon atoms are chemically bonded (covalently bonded) and provide physical properties different from those of phosphorus and the carbon material of the raw materials.

Hereinafter, physical properties of the P-C material will be described in detail while comparing the P-C material to the mixture of phosphorus and the carbon material (hereinafter, sometimes referred to as "P-C mixture").

In the following description, an example of the P-C material and an example of a mixture obtained by mixing the same raw materials as those of the P-C material in a mortar are compared to each other. In the examples shown below, the raw materials of the P-C material and the raw materials of the P-C mixture both contain black phosphorus and the carbon material in a ratio of 6:4 (mass ratio). In addition, in the examples shown below, as the raw materials of both the P-C material and the P-C mixture, cup-stacked carbon nanotubes (CSCNT) are used as the carbon material. Other carbon materials that can be used as the raw material of the P-C material in addition to CSCNT will be described below.

[Behavior with Respect to Heat]

In the P-C material, a ratio $WL_{620}/WL_{780}$ of a weight loss ratio $WL_{620}$ at a measurement temperature of 620°C and a weight loss ratio $WL_{780}$ at a measurement temperature of 780°C, which are obtained by thermogravimetric measurement under the following conditions, is 0.1 or more and 0.9 or less.

(thermogravimetric measurement)

10 mg of the phosphorus-carbon composite material is accurately weighed to prepare a sample, and using a thermogravimetric measuring device, a weight change when the sample is heated from 50°C to 800°C at a temperature rising rate of 10 °C/min in a nitrogen stream is measured.

(weight loss ratio)

a ratio of a weight of the sample at the measurement temperature to a weight of the accurately weighed sample is defined as a weight loss ratio (weight%) at the measurement temperature. Specifically, the ratio of a loss in weight of the sample from the initial weight to each measurement temperature to the weight (initial weight) of the accurately weighed sample is referred to as the "weight loss ratio (weight%)"

FIG. 1 is a graph showing results of the above thermogravimetric measurement performed on the P-C material and the P-C mixture. FIG. 1 shows a heating temperature (°C) on a horizontal axis and the weight loss ratio (weight%) with respect to the weight of the sample on a vertical axis. In FIG. 1, reference sign A indicates a behavior of the P-C material, and reference sign X indicates a behavior of the P-C mixture.

As shown in FIG. 1, in the P-C mixture, the weight loss ratio $WL_{620}$ (indicated by reference sign X1 in FIG. 1) at the measurement temperature of 620°C and the weight loss ratio $WL_{780}$ (indicated by reference sign X2 in FIG. 1) at the measurement temperature of 780°C are both less than 58%. The P-C mixture shows a steep weight loss at a measurement temperature of about 350°C to 450°C, and at 620°C, about 60% of the weight of the sample is lost from the initial weight. In addition, after the steep weight loss at the measurement temperature of about 350°C to 450°C, almost no weight loss is observed. As a result, in the P-C mixture, the ratio $WL_{620}/WL_{780}$ between $WL_{620}$ and $WL_{780}$ is more than 0.9.

The loss in weight in the thermogravimetric measurement of the P-C mixture is considered to correspond to a weight of black phosphorus, which is the raw material. In the P-C mixture, it is considered that the black phosphorus included in the P-C mixture is lost by heating. It is known that black phosphorus is changed to red phosphorus, which is an allotrope of black phosphorus, when heated to 125°C. In addition, it is known that red phosphorus is sublimated at 416°C under normal pressure.

In contrast, the P-C material continues to lose weight from the measurement temperature of about 350°C until 800°C, which is an upper limit of a measurement temperature range, is reached. A weight loss is also observed between the measurement temperature of 620°C and the measurement temperature of 780°C. As a result, the ratio $WL_{620}/WL_{780}$ of the weight loss ratio $WL_{620}$ (indicated by reference sign A1 in FIG. 1) at the measurement temperature of 620°C to the weight loss ratio $WL_{780}$ (indicated by reference sign A2 in FIG. 1) at the measurement temperature of 780°C is included in a range of 0.1 or more and 0.9 or less.

In addition, in the P-C material, it is preferable that a ratio $WL_{300}/WL_{600}$ of a weight loss ratio $WL_{300}$ (indicated by reference sign A3 in FIG. 1) at a measurement temperature of 300°C to the weight loss ratio $WL_{600}$ (indicated by reference sign A4 in FIG. 1) at the measurement temperature of 600°C, which are obtained by the thermogravimetric measurement described above, is included in a range of -0.1 or more and 0.1 or less.

That is, unlike the P-C mixture, the P-C material has no substantial weight loss up to the measurement temperature of 300°C, and is thermally stable at the measurement temperature of 300°C. Therefore, $WL_{300}$ is extremely small, and $WL_{300}/WL_{600}$ is also a value near zero, that is, in a range of -0.1 or more and 0.1 or less.

$WL_{620}/WL_{780}$ is preferably 0.1 or more, more preferably 0.3 or more, and still more preferably 0.5 or more. In

addition, $WL_{620}/WL_{780}$ is preferably 0.9 or less and more preferably 0.8 or less. An upper limit and a lower limit of $WL_{620}/WL_{780}$ may be combined at will.

$WL_{300}/WL_{600}$ is preferably -0.1 or more and more preferably -0.08 or more. In addition, $WL_{300}/WL_{600}$ is preferably 0.1 or less and more preferably 0.08 or less. An upper limit and a lower limit of $WL_{300}/WL_{600}$ may be combined at will.

From the results shown in FIG. 1, it is considered that the black phosphorus used as the raw material in the P-C material has been altered and becomes a material that exhibits a behavior different from that of black phosphorus with respect to heat.

[Presence or Absence of P-C Bond]

The P-C material has a peak showing a bond between the phosphorus atom and the carbon atom in an XPS spectrum. It is known that the "peak showing the bond between the phosphorus atom and the carbon atom" appears in a range of 132 to 136 eV in the XPS spectrum. In the following description, the bond between the phosphorus atom and the carbon atom may be simply referred to as a "P-C bond".

FIG. 2 shows XPS spectra of the P-C material and the P-C mixture. FIG. 2 shows a binding energy (eV) on a horizontal axis and the number of detected photoelectrons (counts per second (cps)) on a vertical axis. In FIG. 2, reference sign A indicates the P-C material, and reference sign X indicates the P-C mixture.

(XPS Spectrum Measurement Conditions)

The XPS spectrum is measured under the following measurement conditions.

· Measuring instrument: XPS device, ESCA-3400 (manufactured by Shimadzu Corporation)
· X-ray source: Mg Kα radiation (20 mA, 10 kV)

In a case where a peak is detected in the range of 132 to 136 eV, it is determined that the P-C bond is present.

The obtained XPS spectrum may include noise in the analysis. Therefore, in the present embodiment, in a case where a line connecting two adjacent local minima in the XPS spectrum is set as a baseline, and a half-width of a local curve including a local maximum sandwiched between the two local minima is 0.5 eV or less, the curve is determined to be "noise". In a case where the presence or absence of the P-C bond is determined using the XPS spectrum, the presence or absence of a peak in the range of 132 to 136 eV is confirmed after excluding the "noise" according to the above definition.

As shown in FIG. 2, it can be seen that in the P-C mixture, no peak showing the P-C bond is detected in the range of 132 to 136 eV, while peaks indicating the P-C bond (indicated by reference sign α) are detected in the P-C material.

From the results shown in FIG. 2, it is considered that the P-C material is a material having chemical bonds between the phosphorus atoms and the carbon atoms.

[External Appearance]

The P-C material includes a core particle containing the phosphorus atom, and a carbon film covering a surface of the core particle.

FIG. 3 is a transmission electron microscope (TEM) photograph of the P-C material. As shown in FIG. 3, a particle 50 of the P-C material has a core-shell structure in which a surface of a core particle 51 including the phosphorus atom is covered with a carbon film 52.

The presence of the phosphorus atom and the carbon atom in the P-C material can be confirmed by using energy dispersive X-ray spectroscopy (EDX).

In addition, in a case where the P-C material consists of only the phosphorus atoms and the carbon atoms, the phosphorus atom, which is a heavier atom, appears darker in the TEM photograph. Therefore, based on the TEM photograph, the presence of the core-shell structure in which the phosphorus atom is included in the core particle 51 and is covered with the carbon film 52 including the carbon atom can be simply determined.

(Imaging Conditions of TEM Photograph)

The TEM photograph is taken under the following imaging conditions.

· TEM device: Transmission electron microscope H-9000NAR (manufactured by Hitachi, Ltd.)
· Field of view: Up to of 500 nm × 500 nm The photograph is taken with at least a part of the particles of the P-C material within the field of view.

The P-C material preferably has the above-described core-shell structure in addition to satisfying the requirements for [Behavior with Respect to Heat] described above.

[Crystalline State]

FIG. 4 shows X-ray diffraction (XRD) profiles of the P-C material and the P-C mixture. FIG. 4 shows a diffraction angle (2θ, °) on a horizontal axis and a diffraction X-ray intensity (a.u.) on a vertical axis. In FIG. 4, the XRD profile indicated by reference sign A indicates the P-C material, and the XRD profile indicated by reference sign X indicates the P-C mixture.

(XRD Profile Measurement Conditions)

The XRD profile is measured under the following measurement conditions.

- · Measuring instrument: Sample horizontal type multipurpose X-ray diffractometer Ultima IV (manufactured by Rigaku Corporation)
- · X-ray source: Cu Kα radiation
- · Measurement range (2θ): 10° to 90°
- · Scanning speed: 4°/min
- · Sampling: 0.02°
- · Voltage: 40 kV, current: 40 mA

As shown in FIG. 4, in the P-C mixture, each of the carbon material and black phosphorus has a certain crystallinity and shows a diffraction peak. By contrast, in the P-C material, the diffraction peaks observed in the P-C mixture is not observed, and only noise is confirmed in the entire measurement range. That is, from the results shown in FIG. 4, it is considered that, in the P-C material, the carbon material used as the raw material either loses crystallinity and becomes amorphous, or has become a carbon material so fine that a crystalline state cannot be confirmed.

Here, in a case where the XRD profile is measured for the P-C material under the above-described conditions, an intensity $I_{20}$ at 2θ = 20°, an intensity $I_{26.3}$ at 2θ = 26.3°, and an intensity $I_{40}$ at 2θ = 40° in the XRD profile measured under the above-described conditions satisfy Relationship Expressions (1) to (3) below.

$$|P|/|B| < 2 \quad \ldots (1)$$

$$P = I_{26.3} - I_{40} \quad \ldots (2)$$

$$B = (I_{20} - I_{40}) \times (26.3 - 40)/(20 - 40) \quad \ldots (3)$$

In a case where the XRD profile is measured for the carbon material, which is the raw material, a peak of the carbon material appears at 2θ = 26.3° corresponding to a peak of graphite (002). On the other hand, in an XRD profile of a normal carbon material, there is no peak at 2θ = 20° or 2θ = 40°. Therefore, in Expression (1) above, the state of the carbon material can be determined by setting 2θ = 40°, at which no peak of the carbon material is present, as a reference point, and comparing an intensity at the reference point in the XRD profile and an intensity at a position (2θ = 26.3°) at which the peak of the carbon material of the raw material is present.

"P" represented by Expression (2) above is a difference between the intensity $I_{40}$ at the reference point and the intensity $I_{26.3}$ at the position at which the peak of the carbon material is present, and indicates a difference in the peak from the reference point.

"B" represented by Expression (3) above indicates the baseline intensity at 2θ = 26.3°, which is estimated from two positions (2θ = 20° and 2θ = 40°) where no peak is present.

From a ratio (|P|/|B|) between absolute values of P and B represented by Expression (1) above, the ratio of the baseline intensity to the peak intensity from the reference point is obtained. A |P|/|B| of 2 or more indicates the presence of a peak of the carbon material.

On the other hand, when |P|/|B| is less than 2 and Expression (1) is satisfied, it can be determined that the peak of the carbon material is reduced and the crystallinity of the carbon material is lowered to where the carbon material is amorphous or the carbon material is so fine that the crystalline state of the carbon material cannot be confirmed. Therefore, it is preferable that the P-C material satisfies Relationship Expressions (1) to (3) above, in addition to satisfying the requirements for [Behavior with Respect to Heat] described above.

As described above, the P-C material is a novel material that is different from the mixture obtained by mixing phosphorus (black phosphorus in FIGS. 1 to 4) and the carbon material as the raw materials in behavior with respect to heat, bonding state, external appearance, and crystalline state.

<<Method of Producing Phosphorus-Carbon Composite Matelial>>

As described above, the P-C material can be produced by a production method that includes a step of compositing the carbon material and phosphorus through a mixing and grinding process accompanied by compression.

In the above-described production method, as the carbon material which is the raw material, at least one selected from the group consisting of amorphous carbon, graphite, porous carbon, mesocarbon microbeads (MCMB), fullerenes, carbon nanotubes, graphene, graphene oxide, carbon nitride ($C_3N_4$), and layered carbon nanofibers (carbon nanofibers platelets) can be used. All of these carbon materials have a graphite structure.

Examples of the amorphous carbon include carbon black (CB), acetylene black (AB), Ketjen black, hard carbon, and soft carbon.

Examples of the fullerenes include $C_{60}$, $C_{72}$, and $C_{84}$.

Examples of the carbon nanotubes include single-walled carbon nanotubes (SWCNT), multi-walled carbon nanotubes (MWCNT), cup-stacked carbon nanotubes (CSCNT), and carbon nanofiber vapor grown carbon fibers (VGCF). These have a structure (one-dimensional structure) extending in one axial direction.

The graphene, the graphene oxide, the carbon nitride ($C_3N_4$), and the layered carbon nanofibers (carbon nanofibers platelets) have a structure (two-dimensional structure) that spreads in a planar direction.

In the carbon material, an end portion (edge site) of the graphite structure has a higher activity than portions other than the edge site because conjugation of $sp^2$ hybrid orbitals is interrupted. Therefore, it is assumed that most of the P-C bonds are formed at the edge sites of the carbon material. Therefore, from the viewpoint of facilitating the formation of the P-C bonds, it is considered that the carbon material to be used is preferably a material having many edge sites.

Examples of the carbon material having many edge sites include CSCNT, graphite, mesocarbon microbeads (MCMB), graphene, graphene oxide, carbon nitride ($C_3N_4$), and layered carbon nanofibers. Among these, as the carbon material, CSCNT is preferable.

In addition, in the above-described production method, any known phosphorus allotropes can be used as the raw phosphorus material. Phosphorus is preferably black phosphorus, which is the most chemically stable and a good conductor of electricity among the phosphorus allotropes.

In the above-described production method, the "mixing and grinding process accompanied by compression" is a process of applying a compression force to a plurality of kinds of powder raw materials to mix and grind the raw materials. It is considered that, by performing the mixing and grinding process accompanied by compression on the carbon material and phosphorus, a strong impact force is applied to the carbon material and phosphorus, and thus a chemical change that cannot be obtained in a normal mixture occurs while the raw material powders are mixed and ground. As a result, it is considered that a P-C material in which a P-C bond that is not present in the raw material is formed and a crystalline state that is observed in the raw material is not observed is obtained as a product.

The "mixing and grinding process accompanied by compression" may be performed until a peak derived from the raw material disappears in the XRD profile of the mixed material. Alternatively, the "mixing and grinding process accompanied by compression" may be performed until the occurrence of the P-C bond can be confirmed in the XPS spectrum of the mixed material.

Examples of a processing device (grinder) capable of performing the mixing and grinding process accompanied by compression include a roller mill, a jet mill, a hammer mill, a pin mill, a disk mill, a rod mill, a ball mill, a vibratory mill, an attritor, and a beads mill. In the production of the P-C material, it is preferable to use a stirred type grinder equipped with a grinding container and a rotating body, particularly from the viewpoint that mixing and grinding can be performed at the same time. Examples of the stirred type grinder include a pin mill, a disk mill, a rod mill, a ball mill, a vibratory mill, an attritor, and a beads mill.

Furthermore, as the above-described processing device, a medium-stirred type grinder is preferable because the raw material powders can be mixed and ground and a strong impact force can be applied to the carbon material and phosphorus at the same time. Examples of the medium-stirred type grinder include a ball mill, a vibratory mill, an attritor, and a beads mill. Among these, a ball mill is a particularly preferable grinder from the viewpoint that property conditions can be easily controlled.

It is considered that, in ball mill mixing, first, the pulverization of phosphorus and the decomposition of carbon material occur, followed by the formation of P-C bonds. In these ball mill mixing procedures, phosphorus becomes the core particles described above.

Thereafter, it is considered that the above-described carbon film is formed around the core particles including the phosphorus atoms to be composited, whereby the P-C material is obtained.

During ball mill mixing, production conditions can be controlled by adjusting a rotation speed of a ball mill device, an amount of media (balls) with respect to the raw materials (ball powder ratio), and a mixing time. That is, by adjusting conditions such as increasing the rotation speed of the ball mill device, increasing the amount of media with respect to the raw materials, and increasing the mixing time, the mixing of phosphorus and the carbon material is promoted, and the P-C material is easily obtained. By controlling the above-described production conditions, the generation of the P-C bond is promoted, and a P-C material satisfying a $WL_{620}/WL_{780}$ of 0.1 or more and 0.9 or less is easily produced.

Balls are grinding media for grinding a metal material. A diameter of the balls is an average particle diameter of the balls. The balls flow at a high speed in the grinding container by the rotation of the grinding container itself within the grinder, and collide with the powder raw materials including the carbon material and phosphorus, thereby grinding the powder raw materials into particles having a smaller average particle diameter. It is preferable that in a grinding step, the grinding container and beads are not excessively worn. Therefore, a shape of the ball is preferably spherical or ellipsoidal.

The diameter of the balls is preferably larger than an average particle diameter of the P-C material after the grinding. By using such balls, a large grinding energy can be imparted to the metal material, so that it is possible to efficiently obtain metal particles within a short period of time. On the other hand, when the diameter of the balls is too large, re-agglomeration of the P-C material is promoted, and the P-C material having a wide particle size distribution is generated.

The diameter of the balls is preferably 0.1 to 10 mm and more preferably 1 to 10 mm. In a case where the diameter of the balls is within this range, the generation of the P-C bond can be promoted, and the re-agglomeration can be suppressed. The diameters of the balls to be put into the grinding container may be uniform or different from each other.

Examples of a material of the ball include glass, agate, alumina, zirconia, stainless steel, chrome steel, tungsten carbide, silicon carbide, and silicon nitride. Among these, zirconia is preferable because of its relatively high hardness, which makes it resistant to wear, and of its relatively high specific gravity, which makes it possible to obtain a high grinding energy. By using these balls, the raw material powders of the P-C material can be efficiently ground.

A weight ratio of the balls to the raw material powders of the P-C material (a weight of the balls when a weight of the raw material powders of the P-C material is set to 1) is referred to as a ball-to-powder ratio. By increasing the ball-to-powder ratio, a strong impact force can be imparted to the raw material powders of the P-C material at a high frequency, so that the generation of the P-C bond can be further promoted. When the ball-to-powder ratio is too high, the amount of the P-C material produced per unit operation is reduced. Therefore, a preferable ball-to-powder ratio is 0.5 to 500, more preferably 1 to 200, and still more preferably 10 to 200.

In addition, after the ball mill mixing is ended, the balls are separated from the P-C material using a filter or the like.

The fact that the above-described P-C material is obtained by the ball mill mixing can be confirmed by measuring an XRD profile of the mixed material and confirming that a peak derived from the raw material disappears as shown in FIG. 4. A duration of the ball mill mixing may be determined by conducting a preliminary experiment on a correspondence between the mixing time and the time until the peak derived from the raw material disappears. In other words, the ball mill mixing may be performed until the peak derived from the raw material disappears in the XRD profile of the mixed material.

Alternatively, the P-C material may be confirmed by measuring an XPS spectrum of the mixed material and observing the presence of the P-C bond as shown in FIG. 2. In this case, the duration of the ball mill mixing may be determined by conducting a preliminary experiment on a correspondence between the mixing time and the time until the P-C bond is generated. In other words, the ball mill mixing may be performed until the generation of the P-C bond can be confirmed in the XPS spectrum of the mixed material.

In the ball mill mixing, the carbon material or phosphorus is interposed between the media colliding with each other or between the media and the ball mill container, so that a strong local impact (pressure) is applied to the carbon material or phosphorus. The details are not clear, but it is considered that, by applying such an impact, a chemical change that cannot be obtained in a normal mixture occurs, a P-C bond which is not present in the raw material is formed, and a P-C material that does not have the crystalline state observed in the raw materials is obtained.

Therefore, according to the production method of the present embodiment, the above-described P-C material can be easily produced by performing the mixing and grinding process accompanied by compression on the carbon material and phosphorus.

In addition, according to the production method of the present embodiment, the above-described P-C material can be easily produced by a simple method of performing ball mill mixing on the carbon material and phosphorus.

<<Negative Electrode Active Mateiial>>

A negative electrode active material includes the above-described P-C material.

The negative electrode active material may solely use the above-described P-C material, or may include a known material used as a negative electrode active material in addition to the P-C material. Examples of such a material include (i) a carbon material capable of inserting and extracting lithium ions, (ii) an alloy-based negative electrode active material which involves the formation of a lithium alloy phase, (iii) a transition metal oxide which undergoes decomposition and regeneration reactions (conversion reactions) with lithium ions, and (iv) an oxide or a composite oxide which has an activity as a negative electrode material active material.

Examples of (i) the carbon material include graphite, hard carbon, soft carbon, and carbon nanotubes.

Examples of (ii) the alloy-based negative electrode active material include a metal of silicon, germanium, tin, aluminum, zinc, or magnesium, or an alloy of these metals.

Examples of (iii) the transition metal oxide include a manganese oxide, an iron oxide, a cobalt oxide, a nickel oxide, a copper oxide, and a magnesium oxide. These oxides may be composite metal oxides further containing another metal (for example, lithium).

Examples of (iv) the oxide or composite oxide include titanium oxide, lithium titanate, and silicon oxide.

<<Negative Electrode for Lithium Secondary Battery>>

A negative electrode for a lithium secondary battery includes the above-described negative electrode active material. The negative electrode for a lithium secondary battery includes, in addition to the negative electrode active material, a current collector and a binder for binding the negative electrode active material to the current collector. The current collector and the binder can adopt a known configuration.

As a material of the current collector, copper or a copper alloy can be suitably used.

As the binder, polyvinylidene fluoride (hereinafter, sometimes referred to as PVdF) can be suitably used.

<<Lithium Secondary Battery>>

A lithium secondary battery includes the above-described negative electrode for a lithium secondary battery (hereinafter, negative electrode).

An example of a lithium secondary battery that is suitable in a case where the above-described negative electrode active material is used has a positive electrode, a negative electrode, a separator interposed between the positive electrode and the negative electrode, and an electrolytic solution disposed between the positive electrode and the negative electrode.

An example of the lithium secondary battery has a positive electrode, a negative electrode, a separator interposed between the positive electrode and the negative electrode, and an electrolytic solution disposed between the positive electrode and the negative electrode.

FIG. 5 is a schematic view showing an example of the lithium secondary battery.

A cylindrical lithium secondary battery 10 is produced as follows.

First, as shown in FIG. 5, a pair of separators 1 having a strip shape, a strip-shaped positive electrode 2 having a positive electrode lead 21 at one end, and a strip-shaped negative electrode 3 having a negative electrode lead 31 at one end are stacked in order of the separator 1, the positive electrode 2, the separator 1, and the negative electrode 3 and are wound to form an electrode group 4.

Next, the electrode group 4 and an insulator (not shown) are accommodated in a battery can 5, a can bottom is then sealed, the electrode group 4 is impregnated with an electrolytic solution 6, and an electrolyte is disposed between the positive electrode 2 and the negative electrode 3. Furthermore, an upper portion of the battery can 5 is sealed with a top insulator 7 and a sealing body 8, whereby the lithium secondary battery 10 can be produced.

Examples of a shape of the electrode group 4 include a columnar shape in which a cross-sectional shape when the electrode group 4 is cut in a direction perpendicular to a winding axis becomes a circle, an ellipse, a rectangle, or a rectangle with rounded corners.

In addition, as a shape of the lithium secondary battery having the electrode group 4, a shape defined by IEC60086, which is a standard for a battery defined by the International Electrotechnical Commission (IEC), or by JIS C 8500 can be adopted. Examples thereof include shapes such as a cylindrical shape or a square shape.

Furthermore, the lithium secondary battery is not limited to the wound type configuration, and may have a stacked type configuration in which a stacked structure of a positive electrode, a separator, a negative electrode, and a separator is repeatedly stacked.

A so-called coin type battery, a button type battery, and a paper type (or sheet type) battery are exemplary examples of the stacked type lithium secondary battery.

Hereinafter, each configuration will be described in order.

(Positive Electrode)

The positive electrode can be produced by preparing a positive electrode mixture containing a positive electrode active material, a conductive material, and a binder, and supporting the positive electrode mixture by a positive electrode current collector.

(Positive Electrode Active Material)

As the positive electrode active material, a lithium-containing compound or a compound containing another metal can be used. Examples of the lithium-containing compound include a lithium cobalt composite oxide having a layered structure, a lithium nickel composite oxide having a layered structure, a lithium manganese composite oxide having a spinel structure, and a lithium iron phosphate having an olivine structure.
Examples of the compound containing another metal include oxides such as titanium oxide, vanadium oxide, and manganese dioxide, and sulfides such as titanium sulfide and molybdenum sulfide.

(Conductive Material)

As the conductive material included in the positive electrode, a carbon material can be used. Examples of the carbon material include graphite powder, carbon black (for example, acetylene black), and a fibrous carbon material.
A proportion of the conductive material in the positive electrode mixture is preferably 5 to 20 parts by mass with respect to 100 parts by mass of the positive electrode active material.

(Binder)

As the binder in the positive electrode, a thermoplastic resin can be used. Examples of the thermoplastic resin include a polyimide resin; a fluororesin such as polyvinylidene fluoride (PVdF) and polytetrafluoroethylene; and a polyolefin resin such as polyethylene and polypropylene and a resin described in WO2019/098384A1 or US2020/0274158A1.

(Positive Electrode Current Collector)

As the positive electrode current collector included in the positive electrode, a strip-shaped member formed of a metal material such as Al, Ni, or stainless steel as a forming material can be used.
As a method for supporting the positive electrode mixture by the positive electrode current collector, a method in which a paste of the positive electrode mixture is prepared using an organic solvent, the obtained paste of the positive electrode mixture is applied to at least one surface side of the positive electrode current collector and dried, and the paste is fixed by performing an electrode pressing step is an exemplary example.
As the organic solvent that can be used in a case where the paste of the positive electrode mixture is prepared, N-methyl-2-pyrrolidone (hereinafter, referred to as NMP in some cases) is an exemplary example.
Examples of a method of applying the paste of the positive electrode mixture to the positive electrode current collector include a slit die coating method, a screen coating method, a curtain coating method, a knife coating method, a gravure coating method, and an electrostatic spraying method. The positive electrode can be manufactured by the method mentioned above.

(Negative Electrode)

The negative electrode included in the lithium secondary battery uses the negative electrode for a lithium secondary battery described above.

(Separator)

As the separator included in the lithium secondary battery, for example, a material that is made of a material such as a polyolefin resin such as polyethylene or polypropylene, a fluororesin, or a nitrogen-containing aromatic polymer and has a form such as a porous film, a non-woven fabric, or a woven fabric can be used. In addition, two or more of these materials may be used to form the separator, or these materials may be laminated to form the separator. Alternatively, a separator described in JP-A-2000-030686 or US2009/0111025A1 may be used.

(Electrolytic Solution)

The electrolytic solution included in the lithium secondary battery contains an electrolyte and an organic solvent.
Examples of the electrolyte contained in the electrolytic solution include lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB refers to bis(oxalato)borate), LiFSI (here, FSI refers to bis(fluorosulfonyl)imide), lower aliphatic carboxylic acid lithium salts, and $LiAlCl_4$, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.
In addition, as the organic solvent that is contained in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, propyl propionate, and γ-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by further introducing a fluoro group into these organic solvents (those obtained by substituting one or more hydrogen atoms in the organic solvents with a fluorine atom) can be used.
The electrolytic solution may contain additives such as tris(trimethylsilyl) phosphate and tris(trimethylsilyl) borate.
As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable.
Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. As the electrolyte and the organic solvent that are contained in the electrolytic solution, the electrolytes and the organic solvents described in WO2019/098384A1 or US2020/0274158A1 may be used.

<All-Solid-State Lithium Secondary Battery>

Next, an all-solid-state lithium secondary battery including the negative electrode described above will be described while a configuration of the all-solid-state lithium secondary battery is described.
FIG. 6 is a schematic view showing an example of the all-solid-state lithium secondary battery. An all-solid-state lithium secondary battery (lithium secondary battery) 1000 shown in FIG. 6 includes a laminate 100 including a positive electrode 110, a negative electrode 120, and a solid electrolyte layer 130, and an exterior body 200 that accommodates the laminate 100. In addition, the all-solid-state lithium secondary battery 1000 may have a bipolar structure in which a positive electrode active material and a negative electrode active material are disposed on both sides of a current collector. As specific examples of the bipolar structure, for example, the structures described in JP-A-2004-95400 are exemplary examples. A material that configures each member will be described below.
The laminate 100 may have an external terminal 113 that is connected to a positive electrode current collector 112 and an external terminal 123 that is connected to a negative electrode current collector 122. In addition, the all-solid-state lithium secondary battery 1000 may have a separator between the positive electrode 110 and the negative electrode 120.
The all-solid-state lithium secondary battery 1000 further has an insulator (not shown) that insulates the laminate 100 and the exterior body 200 from each other and a sealant (not shown) that seals an opening portion 200a of the exterior body 200.
As the exterior body 200, a container formed of a highly corrosion-resistant metal material such as aluminum, stainless steel, or nickel-plated steel can be used. In addition, as the exterior body 200, a container obtained by processing a laminate film having at least one surface subjected to a corrosion resistant process into a bag shape can also be used.
Example of a shape of the all-solid-state lithium secondary battery 1000 include shapes such as a coin type, a button type, a paper type (or a sheet type), a cylindrical type, a square type, and a laminate type (pouch type).
As an example of the all-solid-state lithium secondary battery 1000, a form in which one laminate 100 is provided is shown in the drawings, but the all-solid-state lithium secondary battery 1000 is not limited thereto. The all-solid-state lithium secondary battery 1000 may have a configuration in which the laminate 100 is used as a unit cell and a plurality of unit cells (laminates 100) is sealed inside the exterior body 200.
Hereinafter, each configuration will be described in order.

(Positive Electrode)

The positive electrode 110 has a positive electrode active material layer 111 and the positive electrode current collector 112.

The positive electrode active material layer 111 contains a positive electrode active material and a solid electrolyte. In addition, the positive electrode active material layer 111 may contain a conductive material and a binder.

(Solid Electrolyte)

As the solid electrolyte that is contained in the positive electrode active material layer 111, a solid electrolyte that has lithium ion conductivity and is used in well-known all-solid-state lithium secondary batteries can be adopted. Examples of the solid electrolyte include an inorganic electrolyte and an organic electrolyte. Examples of the inorganic electrolyte include an oxide-based solid electrolyte, a sulfide-based solid electrolyte, and a hydride-based solid electrolyte. Examples of the organic electrolyte include a polymer-based solid electrolyte. Examples of each electrolyte include the compounds described in WO 2020/208872A1, US2016/0233510A1, US2012/0251871A1, and US2018/0159169A1, and examples thereof include the following compounds.

(Oxide-Based Solid Electrolyte)

Examples of the oxide-based solid electrolyte include a perovskite-type oxide, a NASICON-type oxide, a LISICON-type oxide, and a garnet-type oxide. Specific examples of each oxide include the compounds described in WO 2020/208872A1, US2016/0233510A1, and US2020/0259213A1, and examples thereof include the following compounds.

Examples of the perovskite-type oxide include Li-La-Ti-based oxides such as $Li_aLa_{1-a}TiO_3$ ($0 < a < 1$), Li-La-Ta-based oxides such as $Li_bLa_{1-b}TaO_3$ ($0 < b < 1$), and Li-La-Nb-based oxides such as $Li_cLa_{1-c}NbO_3$ ($0 < c < 1$).

Examples of the NASICON-type oxide include $Li_{1+d}Al_dTi_{2-d}(PO_4)_3$ ($0 \leq d \leq 1$). The NASICON-type oxide is an oxide represented by $Li_mM^1{}_nM^2{}_oP_pO_q$ (in the formula, $M^1$ is one or more elements selected from the group consisting of B, Al, Ga, In, C, Si, Ge, Sn, Sb, and Se, $M^2$ is one or more elements selected from the group consisting of Ti, Zr, Ge, In, Ga, Sn, and Al, and m, n, o, p, and q areany positive numbers).

Examples of the LISICON-type oxide include an oxide represented by $Li_4M^3O_4$-$Li_3M^4O_4$ ($M^3$ is one or more elements selected from the group consisting of Si, Ge, and Ti, and $M^4$ is one or more elements selected from the group consisting of P, As, and V).

Examples of the garnet-type oxide include an Li-La-Zr-based oxide such as $Li_7La_3Zr_2O_{12}$ (also referred to as LLZ).

The oxide-based solid electrolyte may be a crystalline material or an amorphous material.

(Sulfide-Based Solid Electrolyte)

Examples of the sulfide-based solid electrolyte include $Li_2S$-$P_2S_5$-based compounds, $Li_2S$-$SiS_2$-based compounds, $Li_2S$-$GeS_2$-based compounds, $Li_2S$-$B_2S_3$-based compounds, LiI-$Si_2S$-$P_2S_5$-based compounds, LiI-$Li_2S$-$P_2O_5$-based compounds, LiI-$Li_3PO_4$-$P_2S_5$-based compounds, and $Li_{10}GeP_2S_{12}$-based compounds.

In this specification, the expression "-based compound" indicating the sulfide-based solid electrolyte is used as a general term for solid electrolytes primarily containing raw materials such as "$Li_2S$" and "$P_2S_5$" described before the "-based compound". For example, the $Li_2S$-$P_2S_5$-based compounds include solid electrolytes primarily containing $Li_2S$ and $P_2S_5$ and further containing a different raw material. A proportion of $Li_2S$ that is contained in the $Li_2S$-$P_2S_5$-based compound is, for example, 50 to 90 mass% with respect to the entire $Li_2S$-$P_2S_5$-based compound. A proportion of $P_2S_5$ that is contained in the $Li_2S$-$P_2S_5$-based compound is, for example, 10 to 50 mass% with respect to the entire $Li_2S$-$P_2S_5$-based compound. In addition, a proportion of the different raw material that is contained in the $Li_2S$-$P_2S_5$-based compound is, for example, 0 to 30 mass% with respect to the entire $Li_2S$-$P_2S_5$-based compound. The $Li_2S$-$P_2S_5$-based compound also includes a solid electrolyte having a different mixing ratio of $Li_2S$ and $P_2S_5$.

Examples of the $Li_2S$-$P_2S_5$-based compounds include $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-LiI-LiBr, $Li_2S$-$P_2S_5$-$Li_2O$, $Li_2S$-$P_2S_5$-$Li_2O$-LiI, and $Li_2S$-$P_2S_5$-$Z_mS_n$ (m and n are positive numbers, and Z is Ge, Zn, or Ga).

Examples of the $Li_2S$-$SiS_2$-based compounds include $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$P_2S_5$-LiCl, $Li_2S$-$SiS_2$-$Li_3PO_4$, $Li_2S$-$SiS_2$-$Li_2SO_4$, and $Li_2S$-$SiS_2$-$Li_xMO_y$ (x and y are positive numbers, and M is P, Si, Ge, B, Al, Ga, or In).

Examples of the $Li_2S$-$GeS_2$-based compounds include $Li_2S$-$GeS_2$ and $Li_2S$-$GeS_2$-$P_2S_5$.

The sulfide-based solid electrolyte may be a crystalline material or an amorphous material.

(Hydride-Based Solid Electrolyte)

Examples of a hydride-based solid electrolyte material include $LiBH_4$, $LiBH_4$-3KI, $LiBH_4$-$PI_2$, $LiBH_4$-$P_2S_5$, $LiBH_4$-$LiNH_2$, $3LiBH_4$-LiI, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, and $Li_4(BH_4)(NH_2)_3$.

(Polymer-Based Solid Electrolyte)

Examples of the polymer-based solid electrolyte include organic polymer electrolytes such as polymer compounds containing one or more selected from the group consisting of a polyethylene oxide-based polymer compound, a polyorganosiloxane chain, and a polyoxyalkylene chain. A so-called gel type in which a non-aqueous electrolytic solution is held in a polymer compound can also be used.

Two or more kinds of solid electrolytes can be used in combination as long as the effects of the invention are not impaired.

(Conductive Material and Binder)

As the conductive material included in the positive electrode active material layer 111, the materials described in the above-described (conductive material) can be used. In addition, as for the proportion of the conductive material in the positive electrode mixture, the proportions described in the above-described (conductive material) can be applied in the same manner. In addition, as the binder that the positive electrode has, the materials described in the above-described (binder) can be used.

(Positive Electrode Current Collector)

As the positive electrode current collector 112 included in the positive electrode 110, the materials described in the above-described (Positive Electrode Current Collector) can be used.

Examples of a method for supporting the positive electrode active material layer 111 by the positive electrode current collector 112 include a method of pressure-molding the positive electrode active material layer 111 on the positive electrode current collector 112.

A cold press or a hot press can be used for the pressure molding.

In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the obtained positive electrode mixture on at least one surface of the positive electrode current collector 112, and fixing the positive electrode mixture by pressing.

Alternatively, the positive electrode active material layer 111 may be supported by the positive electrode current collector 112 by preparing a paste of a mixture of the positive electrode active material, the solid electrolyte, and the conductive material using an organic solvent to produce a positive electrode mixture, applying and drying the obtained positive electrode mixture on at least one surface of the positive electrode current collector 112, and sintering the positive electrode mixture.

As the positive electrode active material that can be used for the positive electrode mixture, the same material as the positive electrode active material described above in (Positive Electrode Active Material) can be used.

As the organic solvent that can be used for the positive electrode mixture, the same organic solvent as the organic solvent that can be used in a case of preparing the paste of the positive electrode mixture described above in (Positive Electrode Current Collector) can be used.

Examples of a method of applying the positive electrode mixture to the positive electrode current collector 112 include the methods described above in (Positive Electrode Current Collector).

The positive electrode 110 can be produced by the methods mentioned above.

Examples of a combination of specific materials that are used for the positive electrode 110 include combinations shown in Table 1 with the positive electrode active material.

[Table 1]

| Solid electrolyte | Binder | Conductive material |
| --- | --- | --- |
| Perovskite-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| NASICON-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| LISICON-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| Garnet-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

[Table 2]

| Solid electrolyte | Binder | Conductive material |
|---|---|---|
| $Li_2S$-$P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S$-$SiS_2$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S$-$GeS_2$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S$-$B_2S_3$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

[Table 3]

| Solid electrolyte | Binder | Conductive material |
|---|---|---|
| LiI-$Si_2S$-$P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | black |
| | | Fibrous carbon material |
| LiI-$Li_2S$-$P_2O_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| LiI-$Li_3PO_4$-$P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_{10}GeP_2S_{12}$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

(Negative Electrode)

The negative electrode 120 has a negative electrode active material layer 121 and the negative electrode current collector 122. The negative electrode active material layer 121 contains the negative electrode active material of the present embodiment.

(Solid Electrolyte Layer)

The solid electrolyte layer 130 has the above-described solid electrolyte.

Examples of a method for producing the solid electrolyte layer 130 include a sputtering method in which an inorganic solid electrolyte is sputtered onto a surface of the positive electrode active material layer 111 included in the positive electrode 110 and a method of applying and drying a paste-form mixture containing a solid electrolyte. For the latter, the solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method in a form in which the negative electrode active material layer 121 is in contact with the surface of the solid electrolyte layer 130.

According to the lithium secondary battery having the above-described configuration, the negative electrode active material including the above-described P-C material is used for the negative electrode. Therefore, a lithium battery having a high capacity and excellent cycle characteristics is achieved.

As one aspect, the present invention also includes the following aspects.

<1> A phosphorus-carbon composite material including: phosphorus atoms; and carbon atoms, in which a content ratio of the phosphorus atoms in the phosphorus-carbon composite material is 10 mass% or more and 95 mass% or less, a content ratio of the carbon atoms in the phosphorus-carbon composite material is 5 mass% or more and 90 mass% or less, and in an XPS spectrum, a peak indicating a bond between the phosphorus atom and the carbon atom is present.

<2> A phosphorus-carbon composite material including: phosphorus atoms; and carbon atoms, in which a content ratio of the phosphorus atoms in the phosphorus-carbon composite material is 10 mass% or more and 95 mass% or less, a content ratio of the carbon atoms in the phosphorus-carbon composite material is 5 mass% or more and 90 mass% or less, and in an XRD profile measured using CuK$\alpha$ radiation, an intensity $I_{20}$ at 2θ = 20°, an intensity $I_{26.3}$ at 2θ = 26.3°, and an intensity $I_{40}$ at 2θ = 40° satisfy Expressions (1) to (3) below.

$$|P|/|B| < 2 \quad \dots (1)$$

$$P = I_{26.3} - I_{40} \quad \dots (2)$$

$$B = (I_{20} - I_{40}) \times (26.3 - 40)/(20 - 40) \quad \dots (3)$$

<3> A phosphorus-carbon composite material including: phosphorus atoms; and carbon atoms, in which a content ratio of the phosphorus atoms in the phosphorus-carbon composite material is 10 mass% or more and 95 mass% or less, a content ratio of the carbon atoms in the phosphorus-carbon composite material is 5 mass% or more and 90 mass% or less, and the phosphorus-carbon composite material includes a core particle containing the phosphorus atom and a carbon film covering a surface of the core particle.

As described above, although preferred examples of the embodiments according to the present invention have been described with reference to the accompanying drawings, the present invention is not limited to such examples.

The variety of shapes, combinations, and the like of the individual constituent members described in the above-described examples are examples, and a variety of modifications are permitted based on design requirements and the like without departing from the gist of the present invention.

[Examples]

Hereinafter, the present invention will be described with reference to examples, but the present invention is not limited to these examples.

In the present example, physical properties were measured by the following methods.

[Thermogravimetric Measurement]

10 mg of the phosphorus-carbon composite material is accurately weighed to prepare a sample, and using a thermogravimetric measuring device, a weight change when the sample is heated from 50°C to 780°C at a temperature rising rate of 10 °C/min in a nitrogen stream is measured.

[XPS Spectrum]

Measurement was performed according to (XPS Spectrum Measurement Conditions) described above.

[Raman Spectrum]

Measurement was performed according to (Raman Spectrum Measurement Conditions) described above.

[TEM Photograph]

Imaging was performed according to (Imaging Conditions of TEM Photograph) described above.

[XRD Profile]

Measurement was performed according to (XRD Profile Measurement Conditions)described above.

[Raw Materials]

In examples and comparative examples, the following materials were used.

(Phosphorus)

Black phosphorus manufactured by RASA Industries, LTD.

(Carbon Material)

CSCNT: manufactured by GSI Creos Corporation
MCMB1: MG10, manufactured by China Steel Chemical Corporation
MCMB2: MG11, manufactured by China Steel Chemical Corporation
MCMB3: MG12, manufactured by China Steel Chemical Corporation
Graphite: SNO15, manufactured by SEC Carbon Ltd.
AB: DENKA BLACK HS100, manufactured by Denka Company Limited
SWCNT: manufactured by GSI Creos Corporation

[Examples 1 to 7]

Black phosphorus and the carbon material were weighed in the ratios shown in Table 4 (total amount 0.5 g), and mixed using a ball mill under the following conditions to obtain P-C materials.

(Ball mill mixing Conditions)

Device: Retsch PM-100
Container: 50 mL container made of $ZrO_2$
Media: 5 mmcp balls made of $ZrO_2$, 60 g
Atmosphere: Argon gas filled
Amount of sample: 0.5 g as a mixture of raw materials

Ball/powder ratio: 120 (weight ratio)
Mixing time: 12 hours

[Comparative Examples 1 and 2]

Black phosphorus and the carbon material were weighed in the ratios shown in Table 4 (total amount 0.5 g) and mixed using a mortar to obtain a P-C mixture.

[Table 4]

| | Phosphorus | Carbon material | Mixing method | Mixing ratio (mass ratio) (P:C) |
|---|---|---|---|---|
| Example 1 | Black phosphorus | CSCNT | Ball mill | 60:40 |
| Example 2 | | MCMB1 | | |
| Example 3 | | MCMB2 | | |
| Example 4 | | MCMB3 | | |
| Example 5 | | Graphite | | |
| Example 6 | | AB | | |
| Example 7 | | SWCNT | | |
| Comparative Example 1 | | CSCNT | Mortar | |
| Comparative Example 2 | | AB | | |

[Evaluation]

Using the obtained materials, evaluation batteries were produced by the following method, and evaluation was performed. The evaluation results are shown in Table 5.

(Preparation of Evaluation Battery)

(1) Preparation of Negative Electrode

The P-C material or the P-C mixture, the conductive material, and the binder were weighed to obtain a mixture of [P-C material or P-C mixture]:[conductive material]:[binder] = 80:10:10 (mass ratio). The materials used are as follows.

Binder: polyvinylidene fluoride PVdF KUREHAKF polymer #1100 (manufactured by Kureha Corporation)

Conductive material: acetylene black, DENKA BLACK HS100 (manufactured by Denka Company Limited)

The above-described mixture and a solvent (N-methyl-2-pyrrolidone (NMP)) were kneaded using an agate mortar to prepare a negative electrode slurry. At this time, a slurry concentration was adjusted to set a content ratio of the negative electrode active material (sum of the P-C material or the P-C mixture, the conductive material, and the binder) in the negative electrode slurry to 30% to 60 mass%.

The negative electrode slurry was applied onto a copper foil current collector using a doctor blade, and then air-dried at 120°C for 1 hour to remove the solvent, thereby obtaining a laminate. The obtained laminate was pressed at a pressure of 10 mPa for 10 seconds and then further vacuum-dried at 120°C for 12 hours to obtain a negative electrode.

The preparation of the negative electrode slurry and the preparation of the negative electrode described above were performed in a glove box with an argon atmosphere.

(2) Preparation of Lithium-Ion Secondary Battery

A lithium-ion secondary battery (coin type battery R2032) was produced by combining the negative electrode produced in (1), a counter electrode, an electrolytic solution, and a separator. The battery was assembled in a glove box with an argon atmosphere.

As the counter electrode, a metal lithium foil was used.

As the electrolytic solution, a mixed solution obtained by adding 10 mass% of fluoroethylene carbonate (FEC)

to a $LiPF_6$ solution (manufactured by Kishida Chemical Co., Ltd.) was used.

As the $LiPF_6$ solution, a solution obtained by dissolving $LiPF_6$ in a mixed solvent in which ethylene carbonate (EC), diethyl carbonate (DEC), and ethyl methyl carbonate (EMC) were mixed in a volume ratio of 30:35:35 such that a concentration of $LiPF_6$ was 1 mol/L was used.

As the separator, a laminated film separator (16 μm thick) in which a heatresistant porous layer was laminated on a polyethylene porous film was used.

(Evaluation 1. Discharge Capacity)

Using the above evaluation battery, a charge/discharge test was conducted under the following conditions at 25°C. Here, a theoretical capacity of phosphorus was set to 2600 mAh/g, and a 1C current at which an electrode capacity was charged or discharged for 1 hour was set to 2600 mAh/g. In the charge/discharge test, the 1C current was calculated from the mass of phosphorus included in the negative electrode.

The definition of 1C in the examples is the same as below.

Minimum charging voltage: 0.005 V
Charging current: 0.1 C (1C = 2600 mA/g)
Maximum discharging voltage: 2.0 V
Discharging current: 0.1C (1C = 2600 mA/g)

In Evaluation 1, those having a discharge capacity of 500 mAh/g or more were determined to be good products, and those having a discharge capacity of less than 500 mAh/g were determined to be defective products. As a reference value, a theoretical discharge capacity of graphite, which is a carbon material, is 372 mAh/g.

(Evaluation 2. Cycle Characteristics)

Using the above evaluation battery, cycle characteristics were evaluated by repeating charging and discharging under the following conditions while held at 25°C. Cycle characteristics were evaluated using a ratio (D100/D1) of a discharge capacity D 100 in a 100th cycle at a 1C-rate current to a charge capacity D 1 in a first cycle. The larger D100/D1 is, the higher a retention ratio of the discharge capacity over the cycles is, so that it can be determined that the negative electrode active material is excellent.

Minimum charging voltage: 0.005 V
Charging current: 1C (1C = 2600 mA/g)
Maximum discharging voltage: 2.0 V
Discharging current: 1C (1C = 2600 mA/g)

In Evaluation 2, those having a D100/D 1 of 50% or more were determined to be good products, and those having a D100/D1 of less than 50% were determined to be defective products.

[Table 5]

| | WL620/ WL780 | WL300/ WL600 | XPS | XRD P/B | Discharge capacity (mAh/g) | Cycle Characteristics D100/D1 (%) |
|---|---|---|---|---|---|---|
| Example 1 | 0.58 | -0.02 | Peak present | 1.17 | 1750 | 95 |
| Example 2 | 0.58 | 0.01 | Peak present | 1.41 | 1391 | 64 |
| Example 3 | 0.59 | -0.05 | Peak present | 0.88 | 1273 | 60 |
| Example 4 | 0.59 | -0.03 | Peak present | 0.95 | 1095 | 59 |
| Example 5 | 0.59 | -0.03 | Peak present | 0.89 | 1530 | 91 |

(continued)

| | WL620/ WL780 | WL300/ WL600 | XPS | XRD P/B | Discharge capacity (mAh/g) | Cycle Characteristics D100/D1 (%) |
|---|---|---|---|---|---|---|
| Example 6 | 0.62 | -0.08 | Peak present | 1.01 | 1480 | 83 |
| Example 7 | 0.75 | -0.02 | Peak present | 1.05 | 1440 | 93 |
| Comparative Example 1 | 0.96 | -0.03 | No peak | 17.21 | 330 | 32 |
| Comparative Example 2 | 1.01 | -0.01 | No peak | 2.17 | 270 | 42 |

FIG. 7 is a graph showing the results of the thermogravimetric measurement of the P-C materials produced in Examples 1 and 4 to 7 and the P-C mixture produced in Comparative Example 2. As shown in FIG. 7, all of the P-C materials satisfied a $WL_{620}/WL_{780}$ of 0. 1 or more and 0.9 or less.

In addition, the P-C material of Example 7 had a $WL_{620}/WL_{780}$ of 0.75, which was larger than that of the P-C materials of the other examples. It is considered that SWCNT, which is the carbon material used in Example 7, has a smaller amount of edge sites with respect to the amount of carbon atoms than other carbon materials. In such a carbon material having fewer edge sites, it is considered that the amount of P-C bonds generated is smaller than that in the carbon material having many edge sites. It is considered that such a difference in the amount of P-C bonds is shown as a difference in the results of the thermogravimetric measurement between the P-C material of Example 7 and the P-C materials of the other examples.

In contrast, the P-C mixtures of Comparative Examples 1 and 2 had a $WL_{620}/WL_{780}$ of more than 0.9, showed a steep weight loss at a measurement temperature of about 350°C to 450°C, and showed almost no weight loss at a temperature of 500°C or higher. Therefore, it can be said that the P-C mixtures of Comparative Examples 1 and 2 did not form new bonds capable of withstanding a temperature as high as 620°C or higher and were in a state of a mixture of phosphorus and the carbon material as the raw materials. For $WL_{300}/WL_{600}$, both measurement samples satisfied -0.1 or more and 0.1 or less.

FIG. 8 shows XPS spectra of the P-C materials produced in Examples 1 to 5 and 7. As shown in FIG. 8, a peak had occurred in a range of 132 to 136 eV in all of the P-C materials, so that the formation of P-C bonds could be confirmed. A peak was observed in a range of 132 to 136 eV also in the P-C material of Example 6.

On the other hand, although not shown in FIG. 8, the P-C mixtures of Comparative Examples 1 and 2 had no peak in a range of 132 to 136 eV in the XPS spectra, and P-C bonds could not be confirmed.

FIG. 9 shows XRD profiles of the P-C materials produced in Examples 1 to 7 and the P-C mixtures produced in Comparative Examples 1 and 2. As shown in FIG. 9, in all of the P-C materials, no peak could be confirmed at a position of $2\theta$ = 26.3°, and it can be determined that the carbon material became amorphous, or became a carbon material so fine that a crystalline state could not be confirmed.

On the other hand, in the P-C mixtures of Comparative Examples 1 and 2, since a peak was confirmed at a position of $2\theta$ = 26.3°, it can be determined that the amorphization of the carbon material was insufficient.

FIG. 10 is a graph showing discharge capacities of the lithium secondary batteries using the P-C materials of Examples 1 to 7 and Comparative Example 2 up to 100 cycles. Evaluation of battery performance showed that the P-C materials of Examples 1 to 7 had a high discharge capacity and excellent cycle characteristics when used as a negative electrode active material. In contrast, the P-C mixture of Comparative Example 2 did not obtain a sufficient discharge capacity and had extremely low cycle characteristics compared to those of the examples.

From the above results, it was confirmed that the present invention was useful.

[Reference Signs List]

3, 120: Negative electrode
10: Lithium secondary battery
50: Particle
51: Core particle

52: Carbon film
1000: All-solid-state lithium secondary battery (lithium secondary battery)

## Claims

1. A phosphorus-carbon composite material comprising:

phosphorus atoms; and
carbon atoms,
wherein a content ratio of the phosphorus atoms in the phosphorus-carbon composite material is 10 mass% or more and 95 mass% or less,
a content ratio of the carbon atoms in the phosphorus-carbon composite material is 5 mass% or more and 90 mass% or less, and
a ratio $WL_{620}/WL_{780}$ of a weight loss ratio $WL_{620}$ at a measurement temperature of 620°C and a weight loss ratio $WL_{780}$ at a measurement temperature of 780°C, which are obtained by thermogravimetric measurement under the following conditions, is 0.1 or more and 0.9 or less, in which
(thermogravimetric measurement)
10 mg of the phosphorus-carbon composite material is accurately weighed to prepare a sample, and using a thermogravimetric measuring device, a weight change when the sample is heated from 50°C to 780°C at a temperature rising rate of 10 °C/min in a nitrogen stream is measured, and
(weight loss ratio)
a ratio of a weight of the sample at the measurement temperature to a weight of the accurately weighed sample is defined as a weight loss ratio (weight%) at the measurement temperature.

2. The phosphorus-carbon composite material according to Claim 1,
wherein a ratio $WL_{300}/WL_{600}$ of a weight loss ratio $WL_{300}$ at a measurement temperature of 300°C and a weight loss ratio $WL_{600}$ at a measurement temperature of 600°C, which are obtained by the thermogravimetric measurement, is -0.1 or more and 0.1 or less.

3. The phosphorus-carbon composite material according to Claim 1 or 2,
wherein, in an XPS spectrum, a peak indicating a bond between a phosphorus atom and a carbon atom is present.

4. The phosphorus-carbon composite material according to any one of Claims 1 to 3,
wherein, in an XRD profile measured using CuKα radiation, an intensity $I_{20}$ at 2θ = 20°, an intensity $I_{26.3}$ at 2θ = 26.3°, and an intensity $I_{40}$ at 2θ = 40° satisfy Expressions (1) to (3) below,

$$|P|/|B| < 2 \quad ... (1)$$

$$P = I_{26.3} - I_{40} \quad ... (2)$$

$$B = (I_{20} - I_{40}) \times (26.3 - 40)/(20 - 40) \quad ... (3).$$

5. The phosphorus-carbon composite material according to any one of Claims 1 to 4,

wherein the phosphorus-carbon composite material includes
a core particle containing a phosphorus atom and
a carbon film covering a surface of the core particle.

6. A method of producing a phosphorus-carbon composite material, the method comprising:
a step of compositing a carbon material and phosphorus by a mixing and grinding process accompanied by compression.

7. A method of producing a phosphorus-carbon composite material, the method comprising:
a step of performing ball mill mixing on a carbon material and phosphorus.

**8.** The method of producing a phosphorus-carbon composite material according to Claim 6 or 7, wherein the carbon material is at least one selected from the group consisting of amorphous carbon, graphite, porous carbon, a mesocarbon microbead, a fullerene, a carbon nanotube, graphene, graphene oxide, carbon nitride ($C_3N_4$), and a layered carbon nanofiber.

**9.** The method of producing a phosphorus-carbon composite material according to any one of Claims 6 to 8, wherein the phosphorus is black phosphorus.

**10.** A negative electrode active material comprising: the phosphorus-carbon composite material according to any one of Claims 1 to 5.

**11.** A negative electrode for a lithium secondary battery, comprising: the negative electrode active material according to Claim 10.

**12.** A lithium secondary battery comprising: the negative electrode for a lithium secondary battery according to Claim 11.

FIG. 1

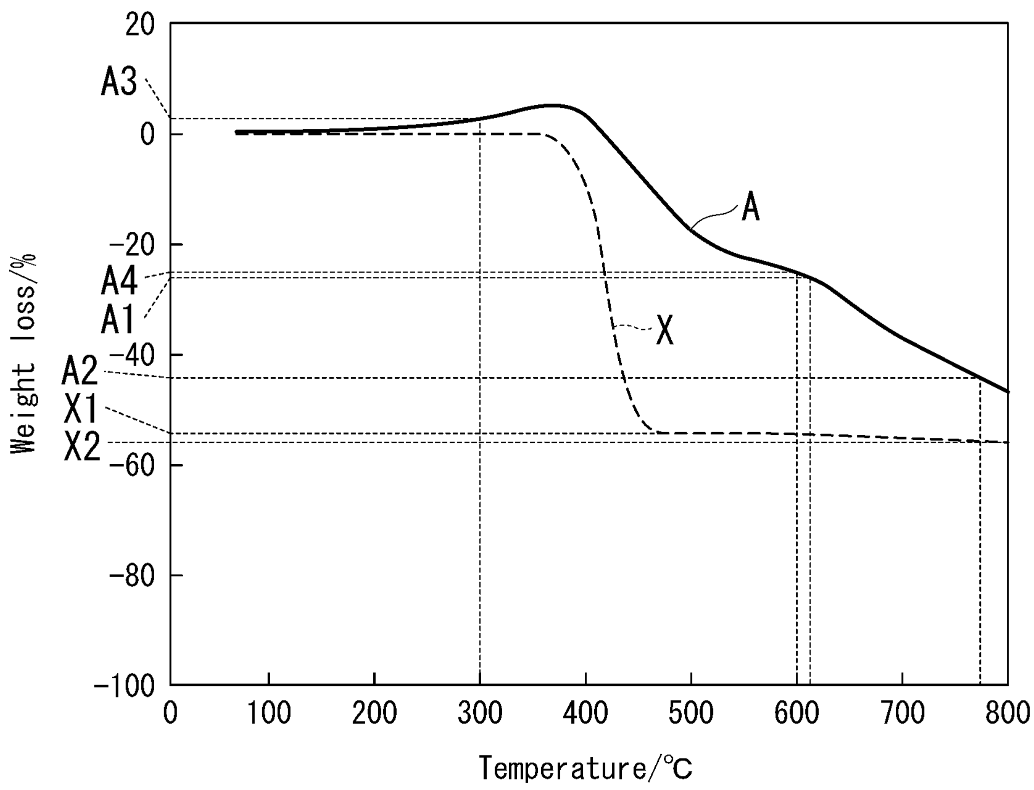
20
A3
0
-20
A4
A1
-40
A2
X1
X2
-60
-80
-100
Weight loss/%
0
100
200
300
400
500
600
700
800
Temperature/℃
A
X

FIG. 2

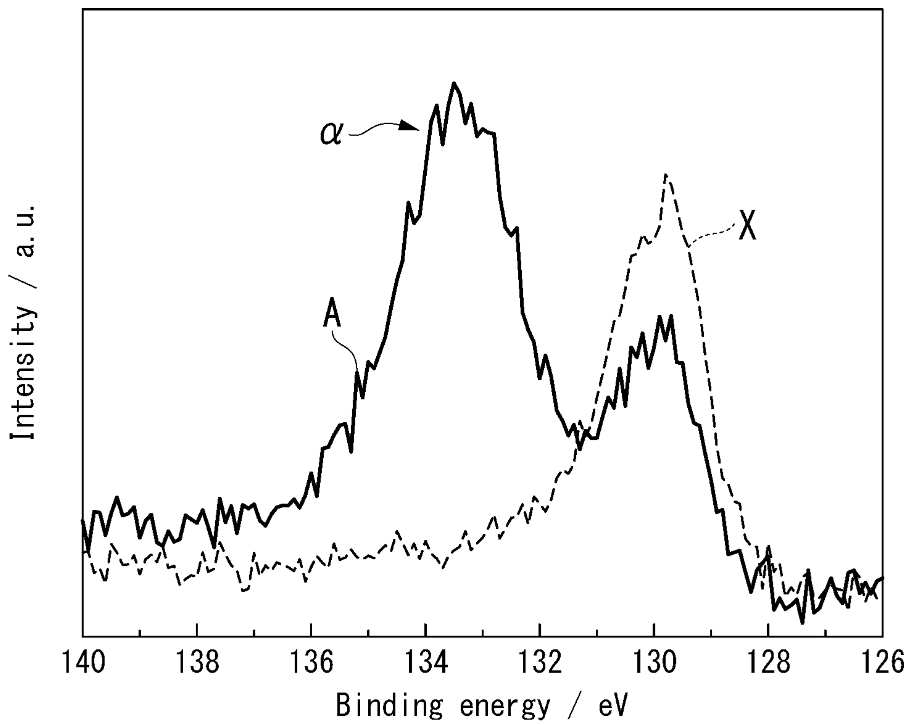
α
A
X
Intensity / a.u.
140
138
136
134
132
130
128
126
Binding energy / eV

FIG. 3

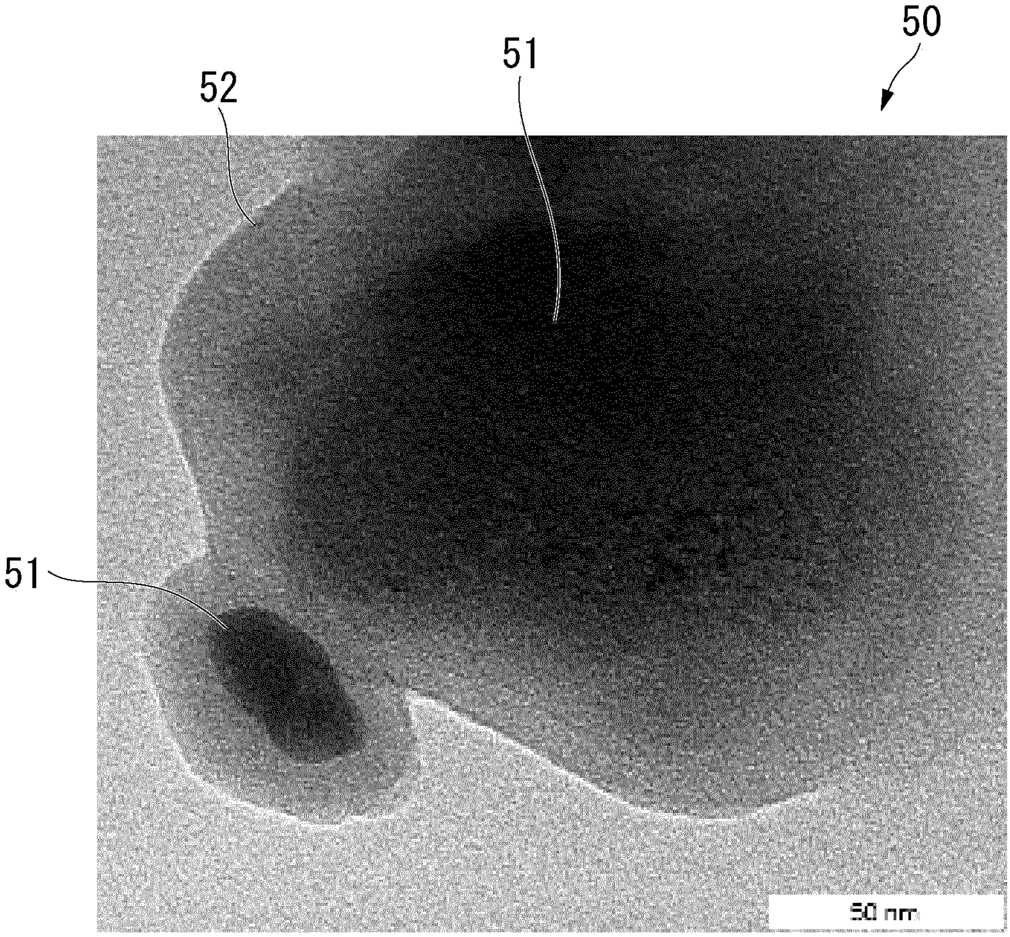

FIG. 4

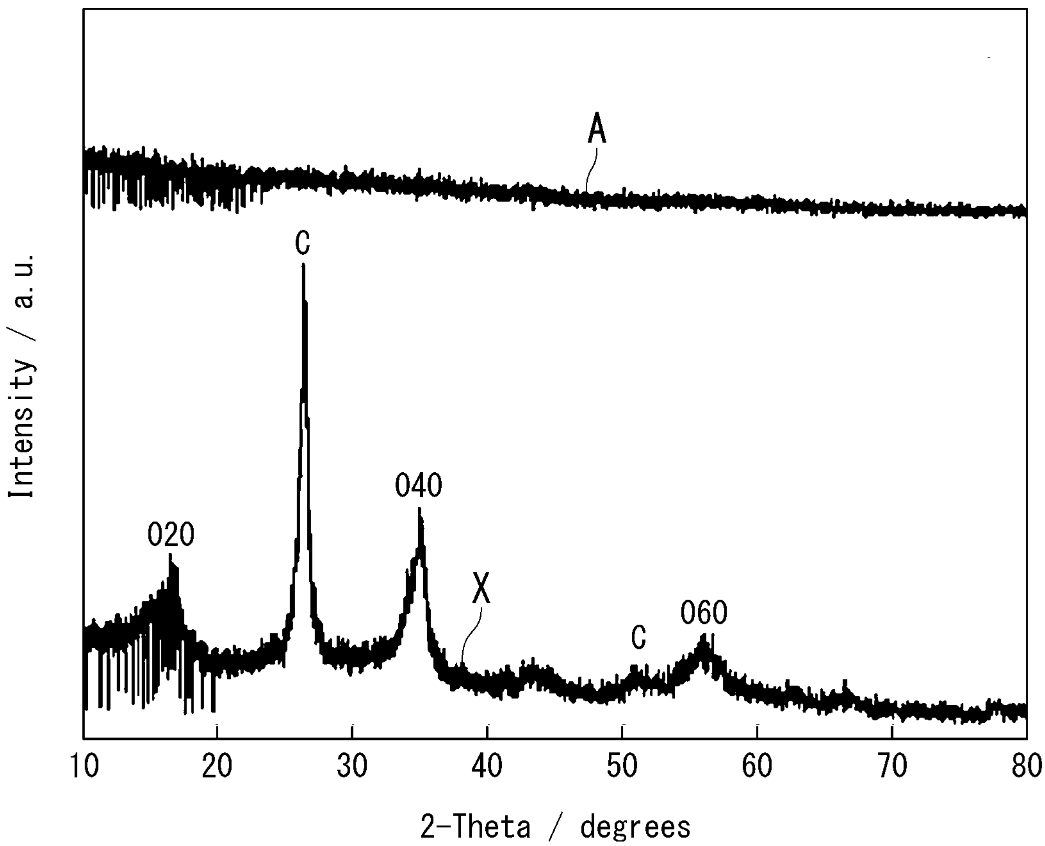
A
C
040
020
X
C
060
Intensity / a.u.
10
20
30
40
50
60
70
80
2-Theta / degrees

FIG. 5

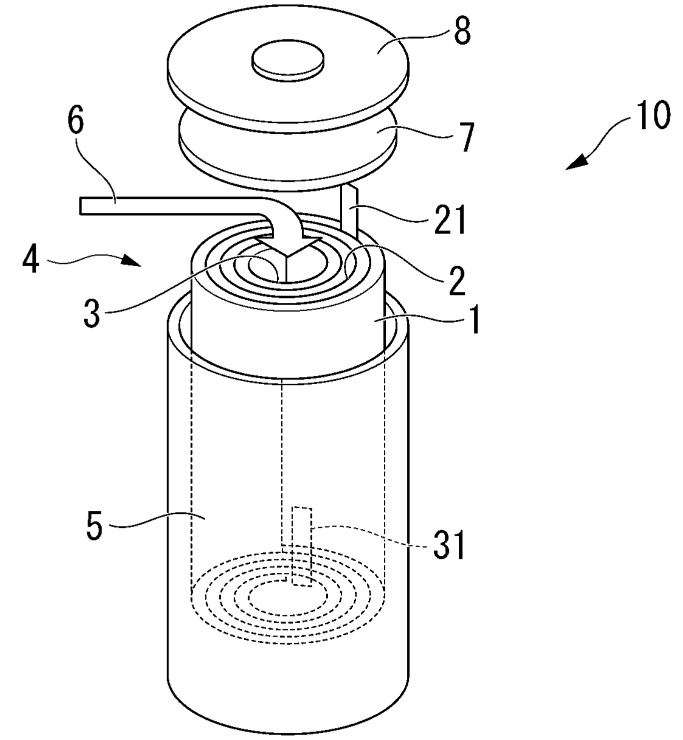
8
7
10
6
21
4
2
3
1
5
31

FIG. 6

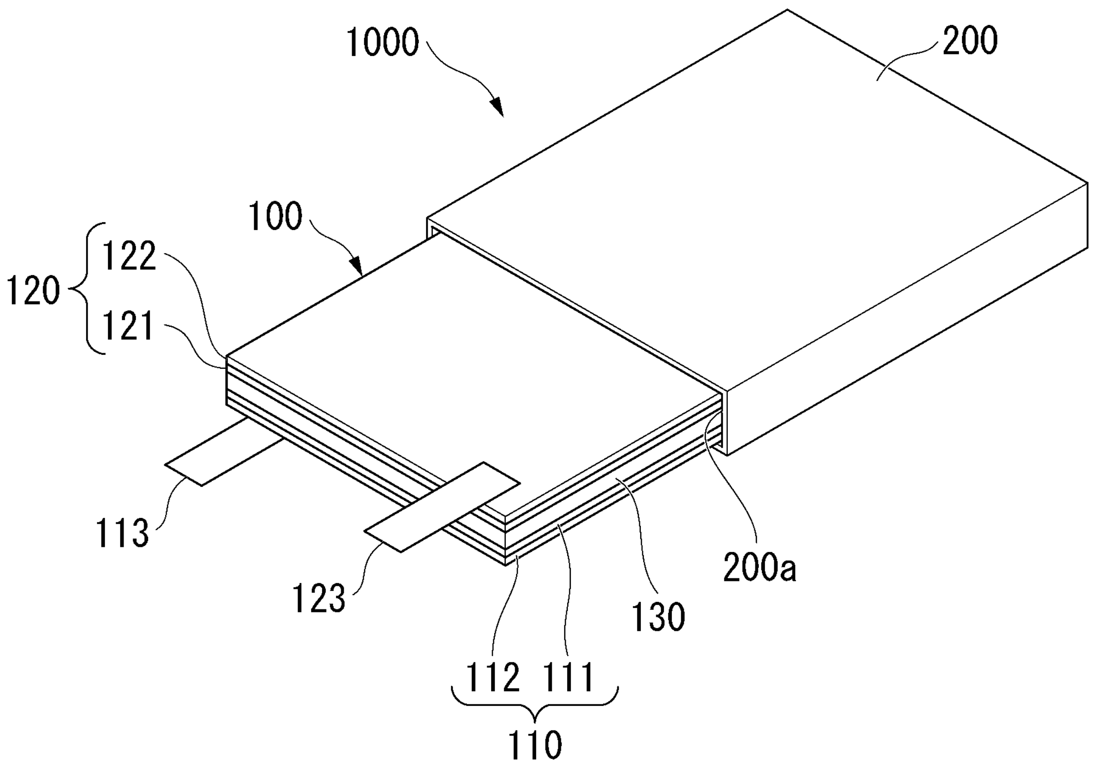
1000
200
100
120
122
121
113
123
200a
130
112
111
110

FIG. 7

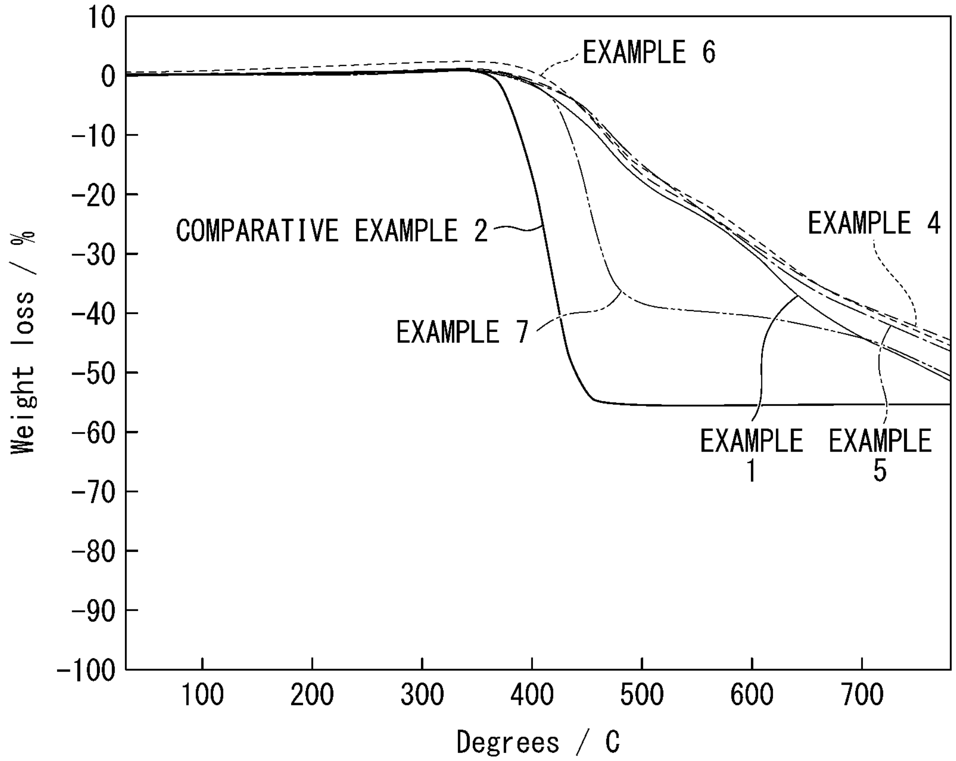
10
0
−10
−20
−30
−40
−50
−60
−70
−80
−90
−100
Weight loss / %
100
200
300
400
500
600
700
Degrees / C
EXAMPLE 6
COMPARATIVE EXAMPLE 2
EXAMPLE 4
EXAMPLE 7
EXAMPLE 1
EXAMPLE 5

FIG. 8

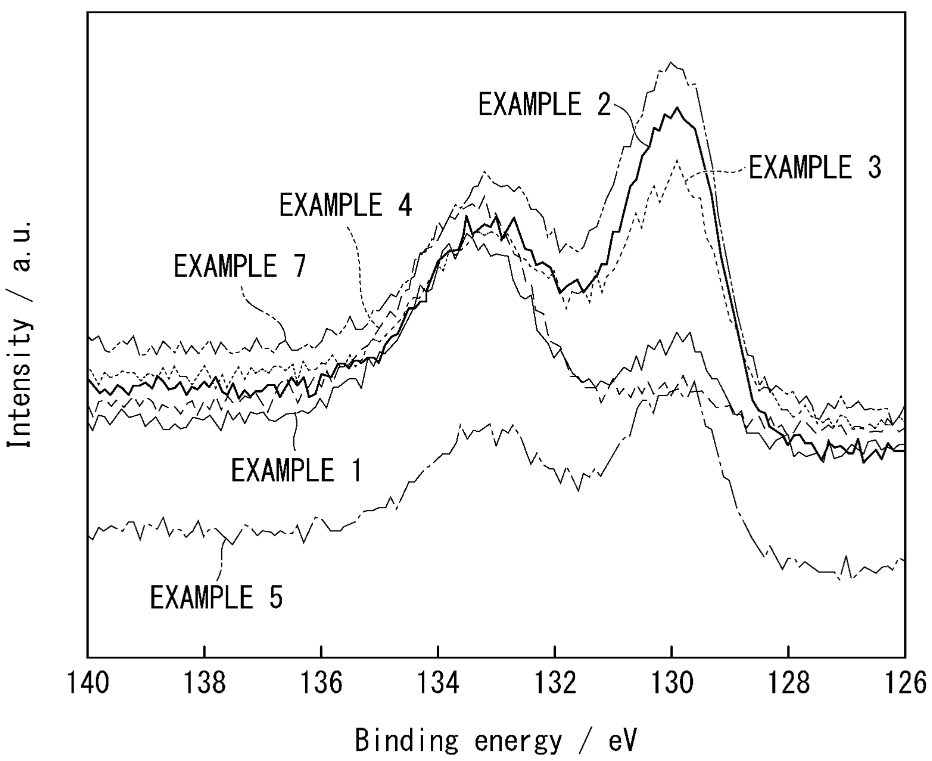
EXAMPLE 2
EXAMPLE 3
EXAMPLE 4
EXAMPLE 7
EXAMPLE 1
EXAMPLE 5
Intensity / a.u.
140
138
136
134
132
130
128
126
Binding energy / eV

FIG. 9

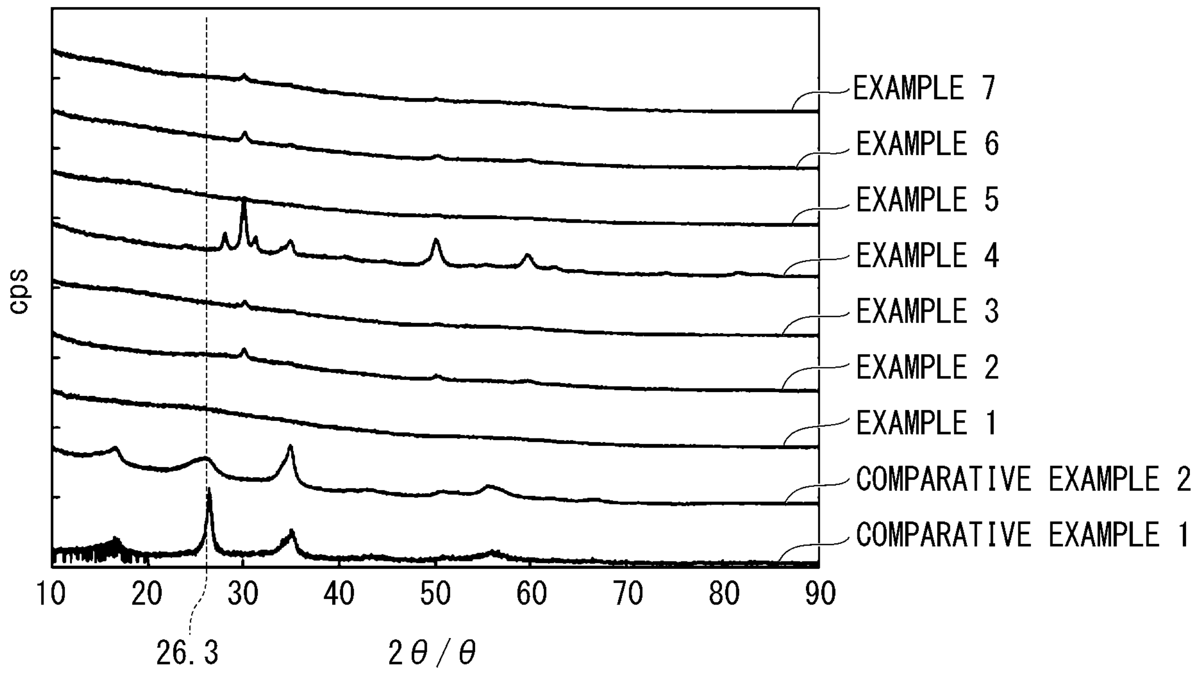
cps
EXAMPLE 7
EXAMPLE 6
EXAMPLE 5
EXAMPLE 4
EXAMPLE 3
EXAMPLE 2
EXAMPLE 1
COMPARATIVE EXAMPLE 2
COMPARATIVE EXAMPLE 1
10
20
30
40
50
60
70
80
90
26.3
2θ/θ

FIG. 10

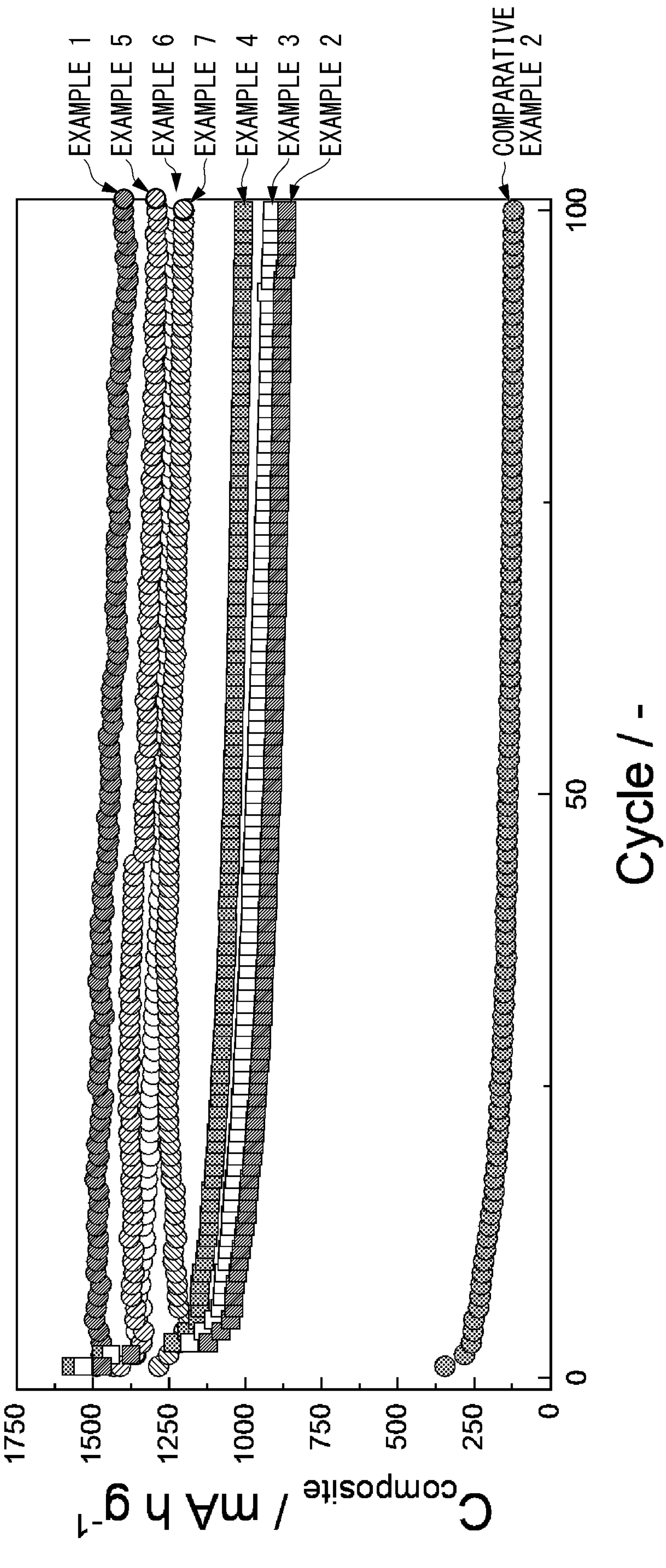
EXAMPLE 1
EXAMPLE 5
EXAMPLE 6
EXAMPLE 7
EXAMPLE 4
EXAMPLE 3
EXAMPLE 2
COMPARATIVE EXAMPLE 2
$C_{composite}$ / mA h g$^{-1}$
Cycle / -
0
50
100
0
250
500
750
1000
1250
1500
1750

## INTERNATIONAL SEARCH REPORT

International application No. **PCT/JP2022/047738**

**A. CLASSIFICATION OF SUBJECT MATTER**

***C01B 25/00***(2006.01)i; ***C01B 25/02***(2006.01)i; ***H01M 4/36***(2006.01)i; ***H01M 4/38***(2006.01)i; ***H01M 4/587***(2010.01)i
FI: C01B25/00 Z; H01M4/36 C; H01M4/36 E; H01M4/587; H01M4/38 Z; C01B25/02 Z

According to International Patent Classification (IPC) or to both national classification and IPC

**B. FIELDS SEARCHED**

Minimum documentation searched (classification system followed by classification symbols)

C01B25/00; C01B25/02; H01M4/36; H01M4/38; H01M4/587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JSTChina/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | SUN, Jie et al. Formation of Stable Phosphorus-Carbon Bond for Enhanced Performance in Black Phosphorus Nanoparticle-Graphite Composite Battery Anodes. Nano Letters, 2014, vol. 14, pp. 4573-4580, pp. 1-12<br>abstract, p. 4576, left column, fig. 1, 3, 4, Part I of Supplementary Information, Part II of fig. S6 | 1-12 |
| X | YANG, J et al. Building a C-P bond to unlock the reversible and fast lithium storage performance of black phosphorus in all-solid-state lithium-ion batteries. Materials Today Energy, 01 February 2021, vol. 20/Article 100662, pp. 1-7<br>1. Introduction, 2.1. Preparation of materials, p. 5, left column, fig. 3, 5 | 1-12 |
| X | SHI, Yang et al. Constructing stable covalent bonding in black phosphorus/reduced graphene oxide for lithium ion battery anodes. Chemical Communications, 2020, vol. 56/issue 78, pp. 11613-11616<br>abstract, fig. 1, 3 | 1-12 |
| X | CN 112018363 A (UNIVERSITY OF SCIENCE AND TECHNOLOGY OF CHINA) 01 December 2020 (2020-12-01)<br>paragraphs [0036]-[0038], fig. 3 | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/047738**

| Patent document cited in search report | Publication date (day/month/year) | Patent family member(s) | Publication date (day/month/year) |
|---|---|---|---|
| CN 112018363 A | 01 December 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021211116 A
- JP H1167207 A
- WO 2019098384 A1
- US 20200274158 A1
- JP 2000030686 A
- US 20090111025 A1
- JP 2004095400 A
- WO 2020208872 A1
- US 20160233510 A1
- US 20120251871 A1
- US 20180159169 A1
- US 20200259213 A1